# EUROPEAN PATENT APPLICATION

(11) **EP 4 460 115 A1**
(43) Date of publication of application: **06.11.2024**
(21) Application number: 22914434.0
(22) Date of filing: 21.12.2022
(51) Int. Cl.: H04W 56/00, H04W 72/04

(54) **TRANSMISSION PROCESSING METHOD AND APPARATUS, AND DEVICE**

(30) Priority: 27.12.2021 CN 202111614246
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: KE, Ting, Beijing 100053 (CN); YANG, Tuo, Beijing 100053 (CN); HU, Lijie, Beijing 100053 (CN); WANG, Fei, Beijing 100053 (CN); HU, Nan, Beijing 100053 (CN)
(74) Representative: Weickmann & Weickmann PartmbB
(86) International application number: PCT/CN2022/140608
(87) International publication number: WO 2023/125180

(57) **Abstract**

A transmission processing method, device and an apparatus are provided, which relates to the field of communication technology. The method is performed by a terminal, including: in a case that a transmission of an uplink channel and/or an uplink reference signal overlaps in time domain with any symbol in a set of symbols reception of synchronization signal blocks (SSBs), if at least one of the following conditions is fulfilled, sending, by the terminal, the uplink channel and/or the uplink reference signal the at least one condition includes: a network device adopts a defined first duplex mode; the terminal has a defined first capability; and the time domain resource and/or frequency domain resource of the uplink channel and/or uplink reference signal fulfills a defined first condition. The solution of the present disclosure solves the problem that the existing SSB transmission limits uplink transmission.

## Description

### CROSS REFERENCE OF RELATED APPLICATION

The present disclosure claims a priority of Chinese patent disclosure No. 202111614246.4 filed on December 27, 2021, which are incorporated herein by reference in its entirety.

### TECHNICAL FIELD

The present disclosure relates to the field of communication technology, and in particular to a transmission processing method, a device and an apparatus.

### BACKGROUND

In the 5G New Radio (NR) network, the synchronization signal/physical broadcast channel signal block (SS/PBCH block) can also be referred to as the synchronization signal block (SSB), including the physical broadcast channel (PBCH), the primary synchronization signal (PSS) and the secondary synchronization signal (SSS). Sometimes, SSB is also called SS-block. SSB is located in the half frame. The duration of a frame is 10ms, so the half frame duration is 5ms. In a half frame, multiple candidate SSBs are included, and the time domain position of each candidate SSB is specified.

At present, the base station indicates the cell-level SSB configuration through high-level parameters, that is, it indicates on which time domain resources the base station will send SSB. However, the existing cell-level SSB configuration requires that the time slot where the SSB is located cannot be used for uplink transmission, which reduces the transmission flexibility in the full-duplex system.

### SUMMARY

The purpose of the present disclosure is to provide a transmission processing method, a device and an apparatus to enable the terminal to perform uplink transmission on the symbol where the SSB is located, thereby ensuring the flexibility of transmission.

To achieve the above object, an embodiment of the present disclosure provides a transmission processing method, which is performed by a terminal and includes:
in a case that a transmission of an uplink channel and/or an uplink reference signal overlaps in time domain with any symbol in a set of symbols reception of synchronization signal blocks (SSBs), if at least one of the following conditions is fulfilled, sending, by the terminal, the uplink channel and/or the uplink reference signal;
the at least one condition includes:
a network device adopts a defined first duplex mode;
the terminal has a defined first capability; and
a time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the method further includes:
receiving a first signaling;
where the first signaling indicates the time domain resource of the SSB to be measured within the SSB measurement duration.

Optionally, the first condition further includes:
receiving downlink control information (DCI);
the DCI is configured to schedule the uplink channel and/or uplink reference signal, and the DCI includes first information, and the first information indicates that the time-frequency resource of the uplink channel and/or uplink reference signal does not conflict with the SSB.

To achieve the above object, an embodiment of the present disclosure provides a transmission processing device, including:
a sending module, configured to, in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition includes:
a network device adopts a defined first duplex mode;
the terminal has a defined first capability; and
a time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the device further includes:
a first signaling receiving module, configured to receive a first signaling;
where the first signaling indicates the time domain resource of the SSB to be measured within the SSB measurement duration.

Optionally, the first condition further includes:
a DCI receiving module configured to receive DCI;
the DCI is configured to schedule the uplink channel and/or uplink reference signal, and the DCI includes first information, and the first information indicates that the time-frequency resource of the uplink channel and/or uplink reference signal does not conflict with the SSB.

To achieve the above object, an embodiment of the present disclosure provides a terminal, including a transceiver, where the transceiver is configured to:
in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition includes:
a network device adopts a defined first duplex mode;
the terminal has a defined first capability; and
the time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the transceiver is configured to:
receive a first signaling;
where the first signaling indicates the time domain resource of the SSB to be measured within the SSB measurement duration.

Optionally, the transceiver is configured to:
receive downlink control information (DCI);
the DCI is configured to schedule the uplink channel and/or uplink reference signal, and the DCI includes first information, and the first information indicates that the time-frequency resource of the uplink channel and/or uplink reference signal does not conflict with the SSB.

To achieve the above object, an embodiment of the present disclosure provides a transmission processing method, which is performed by a network device, including:
in a case that a transmission of an uplink channel and/or an uplink reference signal overlaps in time domain with any symbol in a set of symbols reception of synchronization signal blocks (SSBs), if at least one of the following conditions is fulfilled, receiving, by the network device, the uplink channel and/or the uplink reference signal;
the at least one condition includes:
the network device adopts a defined first duplex mode;
a terminal has a defined first capability; and
the time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the method further includes:
sending a first signaling;
where the first signaling indicates the time domain resource of the SSB to be measured within the SSB measurement duration.

Optionally, the method further includes:
sending downlink control information (DCI);
the DCI is configured to schedule the uplink channel and/or uplink reference signal, and the DCI includes first information, and the first information indicates that the time-frequency resource of the uplink channel and/or uplink reference signal do not conflict with the SSB.

To achieve the above object, an embodiment of the present disclosure provides a transmission processing device, including:
a receiving module, configured to, in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition includes:
the network device adopts a defined first duplex mode;
a terminal has a defined first capability; and
a time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the device further includes:
a first signaling sending module, configured to send a first signaling;
where the first signaling indicates the time domain resource of the SSB to be measured within the SSB measurement duration.

Optionally, the device further includes:
a DCI sending module, configured to send DCI;
the DCI is configured to schedule the uplink channel and/or uplink reference signal, and the DCI includes first information, and the first information indicates that the time-frequency resource of the uplink channel and/or uplink reference signal do not conflict with the SSB.

To achieve the above object, an embodiment of the present disclosure provides a network device, including a transceiver, where the transceiver is configured to:
in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition includes:
the network device adopts a defined first duplex mode;
a terminal has a defined first capability; and
a time domain resource and/or frequency domain resource of the uplink channel and/or uplink reference signal fulfills a defined first condition.

Optionally, the first duplex mode includes a duplex mode other than time division duplex (TDD) and frequency division duplex (FDD).

Optionally, that the terminal has the first capability includes that the terminal supports the first duplex mode; or the terminal supports working in a network in which network devices adopt the first duplex mode.

Optionally, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

Optionally, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Optionally, the transceiver is configured to:
send a first signaling;
where the first signaling indicates the time domain resource of the SSB to be measured within the SSB measurement duration.

Optionally, the transceiver is configured to:
send downlink control information (DCI);
the DCI is configured to schedule the uplink channel and/or uplink reference signal, and the DCI includes first information, and the first information indicates that the time-frequency resource of the uplink channel and/or uplink reference signal do not conflict with the SSB.

To achieve the above-mentioned objectives, an embodiment of the present disclosure provides a terminal, including a transceiver, a processor, a memory, and a program or instruction stored in the memory and executable on the processor; when the processor executes the program or instruction, the transmission processing method executed by the terminal as above is performed, or the transmission processing method executed by the network device as above is performed.

To achieve the above-mentioned objectives, an embodiment of the present disclosure provides a readable storage medium on which a program or instruction is stored. When the program or instruction is executed by a processor, the steps in the transmission processing method performed by the terminal as above, or the steps in the transmission processing method performed by the network device as above are performed.

The beneficial effects of the above technical solution of the present disclosure are as follows:

According to the method of the embodiment of the present disclosure, in a case that a transmission of an uplink channel and/or an uplink reference signal overlaps in time domain with any symbol in a set of symbols reception of synchronization signal blocks (SSBs), if at least one of the following conditions is fulfilled: a network device adopts a defined first duplex mode; the terminal has a defined first capability; and the time domain resource and/or frequency domain resource of the uplink channel and/or uplink reference signal fulfills a defined first condition, the terminal sends the uplink channel and/or the uplink reference signal, thereby allowing the terminal to perform uplink transmission on the symbol where the SSB is located, ensuring the flexibility of transmission.

### BRIEF DESCRIPTION OF THE DRAWINGS

Fig. 1 is a flow chart of a transmission processing method according to an embodiment of the present disclosure;
Fig.2 is a first schematic view of time-frequency resource for uplink and time-frequency resource for downlink;
Fig.3 is a second schematic view of time-frequency resource for uplink and time-frequency resource for downlink;
Fig.4 is a third schematic view of time-frequency resource for uplink and time-frequency resource for downlink;
Fig.5 is a fourth schematic view of time-frequency resource for uplink and time-frequency resource for downlink;
Fig.6 is a fifth schematic view of time-frequency resource for uplink and time-frequency resource for downlink;
Fig.7 is a second flowchart of an authentication method applied to a mobile terminal according to an embodiment of the present disclosure;
Fig.8 is a structural view of the device corresponding to Fig. 1 ;
Fig.9 is a structural view of the device corresponding to Fig.7;
Fig. 10 is a structural view of a terminal according to an embodiment of the present disclosure;

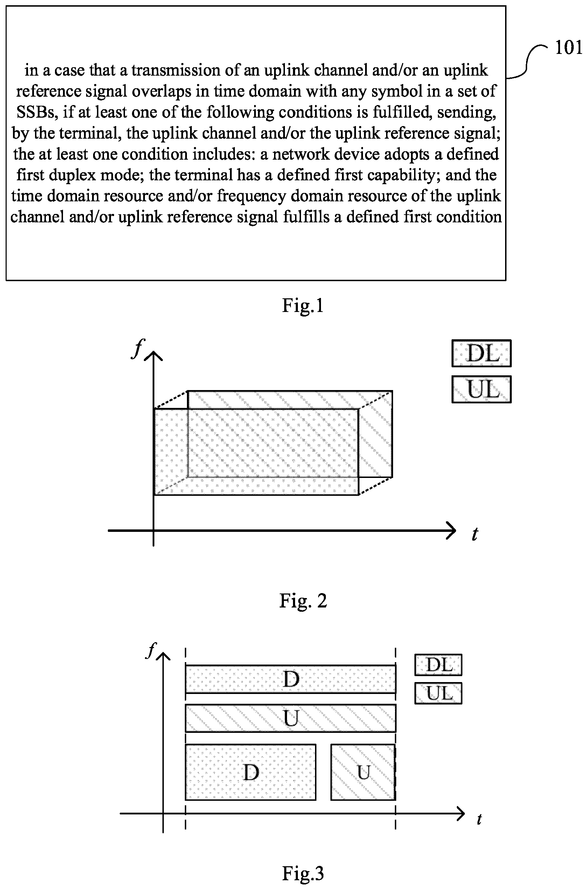

Fig. 1 1 is a structural view of a terminal according to another embodiment of the present disclosure; and

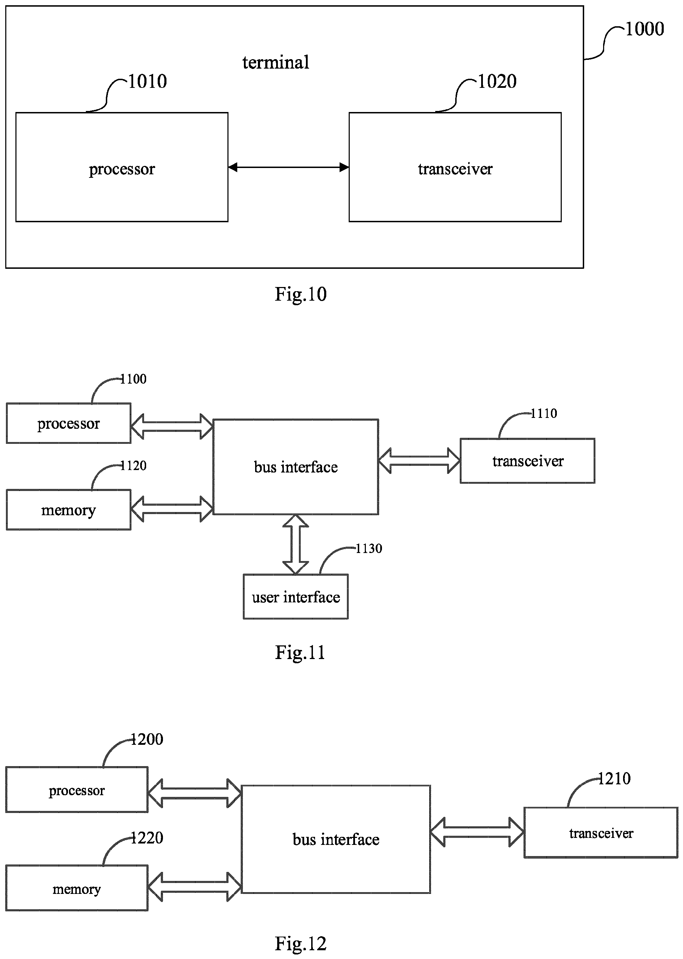

Fig. 12 is a structural view of a network device according to an embodiment of the present disclosure.

### DETAILED DESCRIPTION

In order to make the technical problems, technical solutions and advantages to be solved by the present disclosure clearer, a detailed description will be given below with reference to the accompanying drawings and specific embodiments.

It should be understood that the references to "one embodiment" or "an embodiment" throughout the specification mean that the specific features, structures, or characteristics associated with the embodiment are included in at least one embodiment of the present disclosure. Therefore, the references to "in one embodiment" or "in an embodiment" appearing throughout the specification do not necessarily refer to the same embodiment. In addition, these specific features, structures, or characteristics may be combined in any suitable manner in one or more embodiments.

In the various embodiments of the present disclosure, it should be understood that the size of the serial numbers of the following processes does not mean the order of execution. The execution order of each process should be determined by its function and internal logic, and should not constitute any limitation on the implementation process of the embodiments of the present disclosure.

Additionally, the terms "system" and "network" are often used interchangeably herein.

In the embodiments provided in the present disclosure, it should be understood that "B corresponding to A" means that B is associated with A, and B can be determined according to A. However, it should also be understood that determining B according to A does not mean determining B only according to A, but B can also be determined according to A and/or other information.

As shown in Fig.1 , a transmission processing method according to an embodiment of the present disclosure is performed by a terminal, including:
Step 101: in a case that a transmission of an uplink channel and/or an uplink reference signal overlaps in time domain with any symbol in a set of symbols reception of synchronization signal blocks (SSBs), if at least one of the following conditions is fulfilled, sending, by the terminal, the uplink channel and/or the uplink reference signal;
the at least one condition includes:
   a network device adopts a defined first duplex mode;
   the terminal has a defined first capability; and
   the time domain resource and/or frequency domain resource of the uplink channel and/or uplink reference signal fulfills a defined first condition.

In this way, when at least one of the following is fulfilled: the terminal has a defined first capability, a network device adopts a defined first duplex mode, the time domain resource and/or frequency domain resource of the uplink channel and/or uplink reference signal fulfills a defined first condition, the terminal is able to, in a case that a transmission of an uplink channel and/or an uplink reference signal overlaps in time domain with any symbol in a set of symbols reception of a received SSB, send the uplink channel and/or the uplink reference signal to the network device, thereby reducing the restrictions of SSB transmission on the uplink channel and/or uplink reference signal transmission and ensuring the flexibility of transmission.

The terminal determines a set of symbols reception of SSBs according to the high-level parameters, thereby determining whether the transmission of an uplink channel and/or an uplink reference signal overlaps in time domain with any symbol in a set of symbols reception of. Here, the high-level parameters include at least one of ssb-PositionsInBurst and periodicityServingCell. ssb-PositionsInBurst indicates the time domain position of sending SSB in the half frame containing SSB; periodicityServingCell indicates the period of the half frame of receiving SSB of the serving cell.

It should be known that, in step 101 of this embodiment, "if at least one of the following is fulfilled, the terminal sends the uplink channel and/or uplink reference signal" can also be understood as "unless at least one of the following is fulfilled, the terminal does not transmit the uplink channel and/or uplink reference signal".

It should also be known that, in this embodiment, the uplink channel includes at least one of a physical uplink shared channel (Physical Uplink Shared Channel, PUSCH), a physical uplink control channel (Physical Uplink Control Channel, PUCCH), and a physical random access channel (Physical Random Access Channel, PRACH). The uplink reference signal includes at least one of a channel sounding reference signal (SRS), a demodulation reference signal (DM-RS) for PUSCH, a DM-RS for PUCCH, and a phase tracking reference signal (PT-RS) for PUSCH. The time domain resources include any one of a symbol, a slot, a mini-slot, and a subframe.

For example, when the transmission of the PUSCH, PUCCH or PRACH overlaps in time domain with any symbol in a set of symbols reception of SSBs, if at least one of the above items is fulfilled, the terminal sends the PUSCH, PUCCH or PRACH (or unless at least one of the above items is fulfilled, the terminal does not transmit the PUSCH, PUCCH or PRACH). When the uplink reference signal is SRS, and the transmission of the SRS overlaps in time domain with any symbol in a set of symbols reception of SSBs, if at least one of the above conditions is fulfilled, the terminal sends the SRS (or unless at least one of the above conditions is fulfilled, the terminal does not transmit the SRS).

In this embodiment, the terminal can learn that the network device uses the first duplex mode through the indication of the network device. The indication method of the network device can be that the network device indicates the duplex mode of the base station (or cell), or the network device indicates the duplex mode of the terminal and the base station (or cell).

In some embodiments, the first duplex mode includes a duplex mode other than time division duplex TDD and frequency division duplex FDD.

For example, the first duplex mode is any one of full duplex, full overlapping full duplex, subband non-overlapping full duplex, and subband partially overlapping full duplex. Note that full overlapping full duplex is sometimes referred to as full overlapping duplex, subband non-overlapping full duplex is sometimes referred to as subband non-overlapping duplex, and subband partially overlapping full duplex is sometimes referred to as subband partially overlapping duplex.

Full-duplex refers to that the transceiver sends and receives signals simultaneously in the same carrier frequency band. The transceiver can be a base station or a terminal.

Full overlapping full-duplex means that the transceiver sends and receives signals on the same time-frequency resource. For example, as shown in Fig. 2, for a base station, the downlink (DL) and uplink (UL) are on the same time-frequency resource. Full overlapping full-duplex is also called: In-Band Full-Duplex (IBFD), Same-Frequency Full-Duplex (SFFD), Simultaneous Transmit And Receive (STAR).

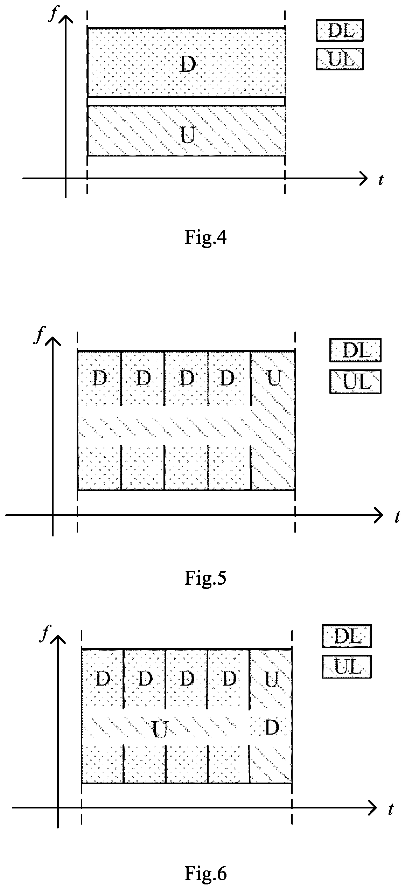

Sub-band non-overlapping full-duplex means that the transceiver sends and receives signals on the same time domain resources within the same carrier bandwidth (band), but on non-overlapping frequency domain resources, and the non-overlapping frequency domain resources are within the same carrier band. For example, as shown in Figs 3 to 6, for a base station, Fig. 3 shows that there are both DL and UL in the same bandwidth (band), but only DL or UL on the same frequency domain resources (such as resource blocks (RB) or resource elements (RE)); Figs 4, 5 and 6 are schematic views of specific frame structure configurations, Fig. 4 is equivalent to sub-band frequency division duplexing (FDD), Fig. 5 has pure UL time slots or symbols, and each time slot or symbol in Fig. 6 has uplink and downlink sub-bands.

Sub-band partially overlapping full-duplex means that the transceiver sends and receives signals on the same time domain resources within the same carrier bandwidth (band), but on partially overlapping frequency domain resources.

The terminal may adopt any one of TDD, FDD, full duplex, complete overlapping full duplex, sub-band non-overlapping full duplex, and sub-band partial overlapping full duplex.

In some embodiments, that the terminal has the first capability includes that the terminal supports the first duplex mode; or, the terminal supports operating in a network in which network devices adopt the first duplex mode.

Here, the terminal supporting the first duplex mode at least includes that the terminal supports working in a network in which network devices adopt the first duplex mode.

In the above content, the network device indicates the duplex mode of the network device (base station/cell); or, the network device indicates the duplex mode of the network device (base station/cell) and the terminal, where the base station/cell adopts the first duplex mode, and the UE can adopt the half-duplex mode (TDD/FDD) or the first duplex mode.

In addition, for the time domain and/or frequency domain resource of the uplink channel and/or the uplink reference signal to satisfy the first condition , in some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In this embodiment, the network device configures the timing occasion for the terminal to measure the SSB through a high-level parameter, namely, the SSB-based Measurement Timing Configuration (SMTC), so that the terminal listens to the SSB during the SSB measurement duration of the SMTC. Here, the SMTC configuration is a terminal-specific configuration. Considering that for half-duplex (such as TDD) terminals, it is not possible to send and receive at the same time, therefore, the terminal cannot send a UL signal during the SSB measurement duration. Therefore, the first condition includes that the uplink channel does not overlap in time domain with the SSB measurement duration. Here, the SSB measurement duration can also be understood as the SMTC measurement duration.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

Specifically, when the transmission of the PUSCH, PUCCH or PRACH overlaps in time domain with any symbol in a set of symbols reception of SSBs, if the time slot where the PUSCH, PUCCH or PRACH is located does not overlap with the SSB measurement duration, the terminal sends the PUSCH, PUCCH or PRACH. When the uplink reference signal is SRS, and the a transmission of the SRS overlaps in time domain with any symbol in a set of symbols reception of SSBs, if the symbol where the SRS is located does not overlap with the SSB measurement duration, the terminal sends the SRS.

In addition, in this embodiment, the first condition is that the uplink channel and/or the uplink reference signal is non-overlapped in time domain with f the SSB to be measured. It should also be understood that the time domain resource of the SSB to be measured are within the SSB measurement duration. That is, at this time, the first condition is that the uplink channel and/or the uplink reference signal is non-overlapped in time domain with SSB to be measured within the SSB measurement duration.

In some embodiments, for the time domain resource of the SSB to be measured, the network device may send a first signaling to indicate the time domain resource of the SSB to be measured within the SSB measurement duration. For the terminal, the method further includes:
receiving a first signaling;

The first signaling indicates the time domain resource of the SSB to be measured within the SSB measurement duration.

That is to say, a transmission of the uplink channel and/or the uplink reference signal is non-overlapped in time domain with the SSB to be measured, which means that the uplink channel and/or the uplink reference signal is non-overlapped in time domain with any symbol in the symbol set of the SSB indicated to be measured within the SSB measurement duration. Here, the time-frequency resource can be an RE or a set including at least one RE.

Specifically, the first instruction is in a bitmap format, where the first/leftmost bit corresponds to SSB index 0, the second bit corresponds to SSB index 1, and so on. A value of 0 in the bitmap indicates that the corresponding SSB does not need to be measured, and a value of 1 indicates that the corresponding SSB needs to be measured.

In addition, in this embodiment, the first condition is that the SSB is not transmitted on the time-frequency resource of the uplink channel and/or the uplink reference signal, and the network device can indicate whether the SSB is transmitted on the time-frequency resource of the uplink channel and/or the uplink reference signal through the DCI. For the terminal, the first condition also includes:
receiving downlink control information (DCI);
the DCI is configured to schedule the uplink channel and/or uplink reference signal, and the DCI includes first information, and the first information indicates that the time-frequency resource of the uplink channel and/or uplink reference signal do not conflict with the SSB.

Therefore, when the terminal receives the DCI including the first information, it can determine, based on the DCI indication, that the time-frequency resource of the uplink channel and/or uplink reference signal do not conflict with the SSB. One possibility is that the SSB is not transmitted on the time domain and/or frequency domain resources that overlap with the time domain resource of the uplink channel and/or uplink reference signal. At this time, the first condition is fulfilled.

The first information is located in the first indication field of the DCI. When the first indication field is set to 0 (or 1), the terminal confirms receipt of the first information and determines that the time-frequency resource of the uplink channel and/or uplink reference signal do not conflict with the SSB, and therefore sends the uplink channel and/or uplink reference signal; conversely, when the first indication field is set to 1 (or 0), if the transmission of the uplink channel and/or uplink reference signal overlaps in time domain with any symbol in a set of symbols reception of SSBs, the terminal will not send the uplink channel and/or uplink reference signal.

In this embodiment, the first condition is that the frequency separation (interval) between the uplink channel and/or uplink reference signal and the SSB is greater than or equal to a first threshold, which can be the lower boundary (edge) of the frequency domain resource of the uplink channel and/or uplink reference signal - the upper boundary (edge) of the frequency domain resource of the SSB ≥ the first threshold, or the lower boundary (edge) of the frequency domain resource of the SSB - the upper boundary (edge) of the frequency domain resource of the uplink channel and/or uplink reference signal ≥ the first threshold.

The lower boundary (edge) of the frequency domain resource of the uplink channel and/or uplink reference signal minus the upper boundary (edge) of the frequency domain resource of the SSB ≥ the first threshold, that is, the frequency domain resource of the uplink channel and/or uplink reference signal are located above the frequency domain resource of the SSB, and the frequency domain resources of the two do not overlap. At this time, the first threshold is the bandwidth of the frequency domain isolation band between the uplink channel and/or uplink reference signal and the SSB, which is used to suppress the interference of the DL transmission on the base station side (i.e. sending SSB) to the UL signal sent by the receiving terminal on the base station side.

The lower boundary (edge) of the frequency domain resource of the SSB minus the upper boundary (edge) of the frequency domain resource of the uplink channel and/or the uplink reference signal ≥ the first threshold, that is, the frequency domain resource of the uplink channel and/or the uplink reference signal are located below the frequency domain resource of the SSB, and the frequency domain resources of the two do not overlap. At this time, the first threshold is also the bandwidth of the frequency domain isolation band between the uplink channel and/or the uplink reference signal and the SSB, which is used to suppress the interference of the DL transmission on the base station side (i.e. sending SSB) to the UL signal sent by the receiving terminal on the base station side.

To summarize, the embodiments of the present disclosure address the problem that the existing SSB configuration limits the flexibility of the full-duplex system (i.e., the time slot where the SSB is located cannot be used for uplink transmission), and propose that the transmission of the uplink channel and/or uplink reference signal overlaps in time domain with any symbol in a set of symbols reception of the SSBs, if at least one of following is fulfilled: the network device adopts the first duplex mode, the terminal has the first capability, and the time domain and/or frequency domain resource of the uplink channel and/or uplink reference signal meet the first conditions, the terminal sends the uplink channel and/or uplink reference signal, thereby allowing the terminal to perform uplink transmission on the symbol where the SSB is located, ensuring the flexibility of the frame structure configuration of the full-duplex system.

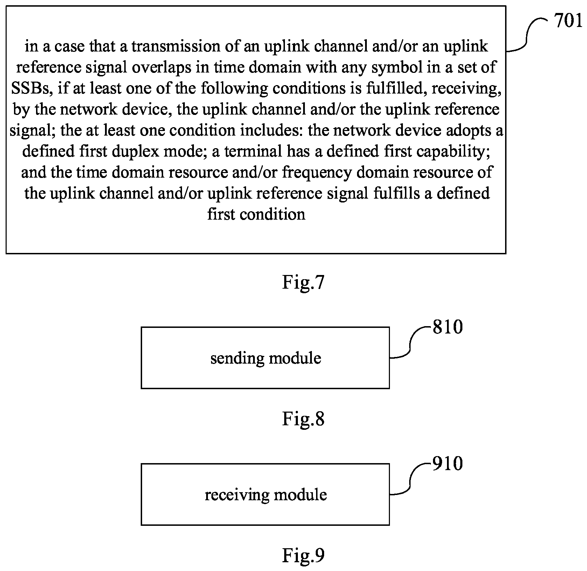

As shown in Fig. 7 , a transmission processing method according to an embodiment of the present disclosure is performed by a network device, including:

Step 701, in a case that a transmission of an uplink channel and/or an uplink reference signal overlaps in time domain with any symbol in a set of symbols reception of synchronization signal blocks (SSBs), if at least one of the following conditions is fulfilled, receiving, by the network device, the uplink channel and/or the uplink reference signal;
the at least one condition includes:
the network device adopts a defined first duplex mode;
a terminal has a defined first capability; and
the time domain resource and/or frequency domain resource of the uplink channel and/or uplink reference signal fulfills a defined first condition.

That is, when the network device receives the terminal and the transmission of the uplink channel and/or uplink reference signal overlaps in time domain with any symbol in a set of symbols reception of SSBs, if at least one of following is fulfilled: the network device adopts the defined first duplex mode, the terminal has the defined first capability, and the time domain and/or frequency domain resource of the uplink channel and/or uplink reference signal meet the defined first conditions, the sent uplink channel and/or uplink reference signal allows the terminal to perform uplink transmission on the symbol where the SSB is located, thereby reducing the restriction of SSB transmission on the uplink channel and/or uplink reference signal transmission and ensuring the flexibility of transmission.

In some embodiments, the first duplex mode includes a duplex mode other than time division duplex (TDD) and frequency division duplex (FDD).

In some embodiments, that the terminal has the first capability includes that the terminal supports the first duplex mode; or the terminal supports working in a network in which network devices adopt the first duplex mode.

In some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

In some embodiments, the method further includes:
sending a first signaling;
where the first signaling indicates the time domain resource of the SSB to be measured within the SSB measurement duration.

In some embodiments, the method further includes:
sending downlink control information (DCI);
the DCI is configured to schedule the uplink channel and/or uplink reference signal, and the DCI includes first information, and the first information indicates that the time-frequency resource of the uplink channel and/or uplink reference signal do not conflict with the SSB.

Of course, correspondingly, the first condition also includes: receiving the DCI.

It should be noted that the method is implemented in conjunction with the above-mentioned method executed by the terminal, and the implementation method of the above-mentioned method embodiment is applicable to this method and can achieve the same technical effect.

As shown in Fig.8 , a transmission processing device according to an embodiment of the present disclosure includes:
a sending module 810, configured to, in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition includes:
   a network device adopts a defined first duplex mode;
   the terminal has a defined first capability; and
   the time domain resource and/or frequency domain resource of the uplink channel and/or uplink reference signal fulfills a defined first condition.

In some embodiments, the first duplex mode includes a duplex mode other than time division duplex (TDD) and frequency division duplex (FDD).

In some embodiments, that the terminal has the first capability includes that the terminal supports the first duplex mode; or the terminal supports working in a network in which network devices adopt the first duplex mode.

In some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

In some embodiments, the device further includes:
a first signaling receiving module, configured to receive a first signaling;
where the first signaling indicates the time domain resource of the SSB to be measured within the SSB measurement duration.

In some embodiments, the first condition further includes:
a DCI receiving module configured to receive DCI;
the DCI is configured to schedule the uplink channel and/or uplink reference signal, and the DCI includes first information, and the first information indicates that the time-frequency resource of the uplink channel and/or uplink reference signal does not conflict with the SSB.

When the transmission of the uplink channel and/or the uplink reference signal overlaps in time domain with any symbol in a set of symbols reception of SSBs, if at least one of the following is me: the network device adopts the first duplex mode, the terminal has the first capability, and the time domain and/or frequency domain resource of the uplink channel and/or the uplink reference signal satisfy the first condition, the device sends the uplink channel and /or the uplink reference signal, allowing the terminal to perform uplink transmission on the symbol where the SSB is located, thereby ensuring the flexibility of transmission.

It should be noted that the device applies the above-mentioned method executed by the terminal, and the implementation method of the above-mentioned method embodiment is applicable to the device and can achieve the same technical effect.

As shown in Fig.9 , a transmission processing device according to an embodiment of the present disclosure includes:
a receiving module 910, configured to, in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition includes:
   the network device adopts a defined first duplex mode;
   a terminal has a defined first capability; and
   the time domain resource and/or frequency domain resource of the uplink channel and/or uplink reference signal fulfills a defined first condition.

In some embodiments, the first duplex mode includes a duplex mode other than time division duplex (TDD) and frequency division duplex (FDD).

In some embodiments, that the terminal has the first capability includes that the terminal supports the first duplex mode; or the terminal supports working in a network in which network devices adopt the first duplex mode.

In some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

In some embodiments, the device further includes:
a first signaling sending module, configured to send a first signaling;
where the first signaling indicates the time domain resource of the SSB to be measured within the SSB measurement duration.

In some embodiments, the device further includes:
a DCI sending module, configured to send DCI;
the DCI is configured to schedule the uplink channel and/or uplink reference signal, and the DCI includes first information, and the first information indicates that the time-frequency resource of the uplink channel and/or uplink reference signal do not conflict with the SSB.

When the transmission of the uplink channel and/or uplink reference signal of the receiving terminal overlaps in time domain with any symbol in a set of symbols reception of SSBs, if at least one of the following is fulfilled: the network equipment adopts the defined first duplex mode, the terminal has the defined first capability, and the time domain and/or frequency domain resource of the uplink channel and/or uplink reference signal satisfy the defined first conditions, the uplink channel and/or uplink reference signal sent allows the terminal to perform uplink transmission on the symbol where the SSB is located, thereby reducing the restriction of SSB transmission on the uplink channel and/or uplink reference signal transmission and ensuring the flexibility of transmission.

It should be noted that the device applies the above-mentioned method executed by the terminal, and the implementation method of the above-mentioned method embodiment is applicable to the device and can achieve the same technical effect.

As shown in Fig. 10 , a terminal 1000 according to an embodiment of the present disclosure includes a transceiver 1020, and the transceiver 1020 is configured to:
in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition includes:
a network device adopts a defined first duplex mode;
the terminal has a defined first capability; and
the time domain resource and/or frequency domain resource of the uplink channel and/or uplink reference signal fulfills a defined first condition.

In some embodiments, the first duplex mode includes a duplex mode other than time division duplex (TDD) and frequency division duplex (FDD).

In some embodiments, that the terminal has the first capability includes that the terminal supports the first duplex mode; or the terminal supports working in a network in which network devices adopt the first duplex mode.

In some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

In some embodiments, the transceiver is configured to:
receive a first signaling;
where the first signaling indicates the time domain resource of the SSB to be measured within the SSB measurement duration.

In some embodiments, the transceiver is configured to:
receive downlink control information (DCI);
the DCI is configured to schedule the uplink channel and/or uplink reference signal, and the DCI includes first information, and the first information indicates that the time-frequency resource of the uplink channel and/or uplink reference signal does not conflict with the SSB.

The terminal further includes a processor 1010, and the processor 1010 is configured to control the transceiver 1020 to perform transmission and reception and related processing.

For the terminal of this embodiment, when the transmission of an uplink channel and/or an uplink reference signal overlaps in time domain with any symbol in a set of symbols reception of SSBs, if the network device adopts the defined first duplex mode, the terminal has the defined first capability, and the time domain and/or frequency domain resource of the uplink channel and/or the uplink reference signal satisfy at least one of the defined first conditions, the terminal sends the uplink channel and/or the uplink reference signal, allowing the terminal to perform uplink transmission on the symbol where the SSB is located, thereby ensuring the flexibility of transmission.

A network device according to an embodiment of the present disclosure includes a transceiver, where the transceiver is configured to:
in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition includes:
the network device adopts a defined first duplex mode;
a terminal has a defined first capability; and
the time domain resource and/or frequency domain resource of the uplink channel and/or uplink reference signal fulfills a defined first condition.

In some embodiments, the first duplex mode includes a duplex mode other than time division duplex (TDD) and frequency division duplex (FDD).

In some embodiments, that the terminal has the first capability includes that the terminal supports the first duplex mode; or the terminal supports working in a network in which network devices adopt the first duplex mode.

In some embodiments, the first condition includes one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

In some embodiments, that the uplink channel is non-overlapped in time domain with an SSB measurement duration includes: a time slot where the uplink channel is located does not overlap with the SSB measurement duration; or
that the uplink reference signal is non-overlapped in time domain with an SSB measurement duration includes: a symbol where the uplink reference signal is located does not overlap with the SSB measurement duration.

In some embodiments, the transceiver is configured to:
send a first signaling;
where the first signaling indicates the time domain resource of the SSB to be measured within the SSB measurement duration.

In some embodiments, the transceiver is configured to:
send downlink control information (DCI);
the DCI is configured to schedule the uplink channel and/or uplink reference signal, and the DCI includes first information, and the first information indicates that the time-frequency resource of the uplink channel and/or uplink reference signal do not conflict with the SSB.

A terminal according to another embodiment of the present disclosure, as shown in Fig. 11, includes a transceiver 1110, a processor 1100, a memory 1120, and a program or instruction stored in the memory 1120 and executable on the processor 1100; when the processor 1100 executes the program or instruction, the transmission processing method performed by the terminal is implemented.

The transceiver 1110 is configured to receive and send data under the control of the processor 1100.

In Fig. 11, the bus architecture may include any number of interconnected buses and bridges, specifically one or more processors represented by processor 1100 and various circuits of memory represented by memory 1120 are linked together. The bus architecture can also link various other circuits such as peripherals, voltage regulators, and power management circuits together, which are all well known in the art and are therefore not further described herein. The bus interface provides an interface. The transceiver 1110 can be a plurality of components, namely, a transmitter and a receiver, providing a unit for communicating with various other devices on a transmission medium. For different user devices, the user interface 1130 can also be an interface that can be connected to external or internal devices, and the connected devices include but are not limited to keypads, displays, speakers, microphones, joysticks, etc.

The processor 1100 is responsible for managing the bus architecture and general processing, and the memory 1120 can store data used by the processor 1100 when performing operations.

A network device according to another embodiment of the present disclosure, as shown in Fig. 12, includes a transceiver 1210, a processor 1200, a memory 1220, and a program or instruction stored in the memory 1220 and executable on the processor 1200; when the processor 1200 executes the program or instruction, the transmission processing method performed by the network device is implemented.

The transceiver 1210 is configured to receive and send data under the control of the processor 1200.

Among them, in Fig. 12, the bus architecture can include any number of interconnected buses and bridges, specifically one or more processors represented by processor 1200 and various circuits of memory represented by memory 1220 are linked together. The bus architecture can also link various other circuits such as peripherals, regulators, and power management circuits together, which are all well known in the art, so they are not further described herein. The bus interface provides an interface. The transceiver 1210 can be a plurality of components, that is, including a transmitter and a receiver, providing a unit for communicating with various other devices on a transmission medium. The processor 1200 is responsible for managing the bus architecture and general processing, and the memory 1220 can store data used by the processor 1200 when performing operations.

A readable storage medium of an embodiment of the present disclosure stores a program or instruction thereon. When the program or instruction is executed by a processor, the steps in the transmission processing method executed by the terminal as above, or the steps in the transmission processing method executed by the network device as above, are implemented, and the same technical effect can be achieved. To avoid repetition, they are not repeated here.

The processor is the processor described in the above embodiment. The readable storage medium includes a computer readable storage medium, such as a computer read-only memory (ROM), a random access memory (RAM), a magnetic disk or an optical disk.

It should be further explained that the terminals described in this specification include but are not limited to smart phones, tablet computers, etc., and many of the functional components described are called modules in order to more particularly emphasize the independence of their implementation methods.

In the embodiment of the present disclosure, the module can be implemented with software so that it can be executed by various types of processors. For example, an executable code module of an identification can include one or more physical or logical blocks of computer instructions, for example, it can be constructed as an object, process or function. Nevertheless, the executable code of the identified module does not need to be physically located together, but can include different instructions stored in different bits, and when these instructions are logically combined together, it constitutes a module and realizes the specified purpose of the module.

In fact, executable code module can be a single instruction or many instructions, and can even be distributed on a plurality of different code segments, distributed among different programs, and distributed across a plurality of memory devices. Similarly, operating data can be identified in the module, and can be implemented and organized in the data structure of any appropriate type according to any appropriate form. The operating data can be collected as a single data set, or can be distributed in different locations (including on different storage devices), and can only be present on a system or network as an electronic signal at least in part.

When a module can be implemented by software, considering the level of existing hardware technology, a person skilled in the art can build a corresponding hardware circuit to implement the corresponding function of the module that can be implemented by software without considering the cost. The hardware circuit includes a conventional very large scale integration (VLSI) circuit or gate array and existing semiconductors such as logic chips, transistors, or other discrete components. The module can also be implemented by a programmable hardware device, such as a field programmable gate array, a programmable array logic, a programmable logic device, etc.

The above exemplary embodiments are described with reference to the accompanying drawings, and many different forms and embodiments are feasible without departing from the spirit and teachings of the present disclosure. Therefore, the present disclosure should not be constructed as a limitation of the exemplary embodiments proposed herein. More specifically, these exemplary embodiments are provided so that the present disclosure will be perfect and complete, and the scope of the present disclosure will be conveyed to those who are familiar with the technology. In these figures, the component sizes and relative sizes may be exaggerated for clarity. The terms used here are only based on the purpose of describing specific exemplary embodiments and are not intended to be limiting. As used herein, unless the text clearly indicates otherwise, the singular forms "one", "an" and "the" are intended to include these multiple forms. It will be further understood that the terms "including" and/or "including" when used in this specification indicate the presence of the features, integers, steps, operations, components and/or components, but do not exclude the presence or increase of one or more other features, integers, steps, operations, components, components and/or their groups. Unless otherwise indicated, when stated, a range of values includes the upper and lower limits of that range and any subranges therebetween.

The above is a preferred embodiment of the present disclosure. It should be pointed out that for ordinary technicians in this technical field, several improvements and modifications can be made without departing from the principles of the present disclosure. These improvements and modifications should also be regarded as the scope of protection of the present disclosure.

## Claims

1. A transmission processing method, performed by a terminal, comprising:
in a case that a transmission of an uplink channel and/or an uplink reference signal overlaps in time domain with any symbol in a set of symbols reception of synchronization signal blocks (SSBs), if at least one of the following conditions is fulfilled, sending, by the terminal, the uplink channel and/or the uplink reference signal;
the at least one condition comprises:
a network device adopts a defined first duplex mode;
the terminal has a defined first capability; and
a time domain resource and/or frequency domain resource of the uplink channel and/or uplink reference signal fulfills a defined first condition.

2. The method according to claim 1, wherein the first duplex mode comprises a duplex mode other than time division duplex (TDD) and frequency division duplex (FDD).

3. The method according to claim 1 or 2, wherein that the terminal has the defined first capability comprises that the terminal supports the first duplex mode; or the terminal supports working in a network in which network devices adopt the first duplex mode.

4. The method according to claim 1, wherein the first condition comprises one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

5. The method according to claim 4, wherein that the uplink channel is non-overlapped in time domain with an SSB measurement duration comprises: a time slot where the uplink channel is located does not overlap with the SSB measurement duration; or
that the uplink reference signal is non-overlapped in time domain with an SSB measurement duration comprises: a symbol where the uplink reference signal is located does not overlap with the SSB measurement duration.

6. The method according to claim 1, further comprising:
receiving a first signaling;
wherein the first signaling indicates the time domain resource of the SSB to be measured within the SSB measurement duration.

7. The method according to claim 1, wherein the first condition further comprises:
receiving downlink control information (DCI);
the DCI is configured to schedule the uplink channel and/or uplink reference signal, and the DCI comprises first information, and the first information indicates that the time-frequency resource of the uplink channel and/or uplink reference signal does not conflict with the SSB.

8. A transmission processing method, performed by a network device, comprising:
in a case that a transmission of an uplink channel and/or an uplink reference signal overlaps in time domain with any symbol in a set of symbols reception of synchronization signal blocks (SSBs), if at least one of the following conditions is fulfilled, receiving, by the network device, the uplink channel and/or the uplink reference signal;
the at least one condition comprises:
the network device adopts a defined first duplex mode;
a terminal has a defined first capability; and
a time domain resource and/or frequency domain resource of the uplink channel and/or uplink reference signal fulfills a defined first condition.

9. The method according to claim 8, wherein the first duplex mode comprises a duplex mode other than time division duplex (TDD) and frequency division duplex (FDD).

10. The method according to claim 8 or 9, wherein that the terminal has the defined first capability comprises that the terminal supports the first duplex mode; or the terminal supports working in a network in which network devices adopt the first duplex mode.

11. The method according to claim 8, wherein the first condition comprises one or more of the following combinations:
the uplink channel and/or uplink reference signal is non-overlapped in time domain with an SSB measurement duration;
the uplink channel and/or uplink reference signal is non-overlapped in time domain with the SSB to be measured;
the SSB is not transmitted on the time-frequency resource of the uplink channel and/or uplink reference signal;
the uplink channel and/or uplink reference signal is non-overlapped in time and frequency domain with the SSB transmission;
the frequency separation between the uplink channel and/or uplink reference signal and the SSB is greater than or equal to a first threshold.

12. The method according to claim 11, wherein that the uplink channel is non-overlapped in time domain with an SSB measurement duration comprises: a time slot where the uplink channel is located does not overlap with the SSB measurement duration; or
that the uplink reference signal is non-overlapped in time domain with an SSB measurement duration comprises: a symbol where the uplink reference signal is located does not overlap with the SSB measurement duration.

13. The method according to claim 8, further comprising:
sending a first signaling;
wherein the first signaling indicates the time domain resource of the SSB to be measured within the SSB measurement duration.

14. The method according to claim 8, further comprising:
sending downlink control information (DCI);
the DCI is configured to schedule the uplink channel and/or uplink reference signal, and the DCI comprises first information, and the first information indicates that the time-frequency resource of the uplink channel and/or uplink reference signal do not conflict with the SSB.

15. A transmission processing device, comprising:
a sending module, configured to, in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition comprises:
a network device adopts a defined first duplex mode;
the terminal has a defined first capability; and
a time domain resource and/or frequency domain resource of the uplink channel and/or uplink reference signal fulfills a defined first condition.

16. A terminal, comprising a transceiver, wherein the transceiver is configured to:
in a case that a transmission of an uplink channel and/or an uplink reference signal overlaps in time domain with any symbol in a set of symbols reception of synchronization signal blocks (SSBs), if at least one of the following conditions is fulfilled, send the uplink channel and/or the uplink reference signal;
the at least one condition comprises:
a network device adopts a defined first duplex mode;
the terminal has a defined first capability; and
a time domain resource and/or frequency domain resource of the uplink channel and/or uplink reference signal fulfills a defined first condition.

17. A transmission processing device, comprising:
a receiving module, configured to, in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition comprises:
the network device adopts a defined first duplex mode;
a terminal has a defined first capability; and
a time domain resource and/or frequency domain resource of the uplink channel and/or uplink reference signal fulfills a defined first condition.

18. A network device, comprising a transceiver, wherein the transceiver is configured to:
in a case that a transmission of an uplink channel and/or an uplink reference signal overlaps in time domain with any symbol in a set of symbols reception of synchronization signal blocks (SSBs), if at least one of the following conditions is fulfilled, receive the uplink channel and/or the uplink reference signal;
the at least one condition comprises:
the network device adopts a defined first duplex mode;
a terminal has a defined first capability; and
a time domain resource and/or frequency domain resource of the uplink channel and/or uplink reference signal fulfills a defined first condition.

19. A communication apparatus, comprising: a transceiver, a processor, a memory, and a program or instruction stored in the memory and executable on the processor; when the processor executes the program or instruction, the transmission processing method according to any one of claims 1 to 7 or the transmission processing method according to any one of claims 8 to 14 is performed.

20. A readable storage medium, storing a program or instruction, wherein the program or instruction is executed by a processor to perform the scheduling method according to any one of claims 1 to 7, or the transmission processing method according to any one of claims 8 to 14.
